Europäisches Patentamt

European Patent Office

Office européen des brevets

(11) Veröffentlichungsnummer: **0 158 823**
**A2**

(12) # EUROPÄISCHE PATENTANMELDUNG

(21) Anmeldenummer: 85102807.6

(22) Anmeldetag: 12.03.85

(51) Int. Cl.⁴: **B 01 D 53/34**

(30) Priorität: 14.04.84 DE 3414121

(43) Veröffentlichungstag der Anmeldung:
23.10.85 Patentblatt 85/43

(84) Benannte Vertragsstaaten:
BE FR GB NL

(71) Anmelder: BROWN, BOVERI & CIE Aktiengesellschaft
Kallstadter Strasse 1
D-6800 Mannheim 31(DE)

(72) Erfinder: Schmidt, Conrad, Dr. Dipl.-Phys.
Wielandstrasse 2
D-6901 Gaiberg(DE)

(74) Vertreter: Kempe, Wolfgang, Dr. et al,
c/o Brown, Boveri & Cie AG Postfach 351
D-6800 Mannheim 1(DE)

(54) Verfahren und Vorrichtung zur Reinigung von Abgasen.

(57) Die Erfindung bezieht sich auf ein Verfahren und eine Vorrichtung zur Reinigung von Abgasen, die mit Stickoxid, Schwefeldioxid und Staub beladen sind. Zur Reinigung des Abgases werden mehrere lokal begrenzte, von-einander getrennte Entladungszonen oder ein Plasma ausgebildet, durch welche das zu reinigende Abgas (10) hindurchgeführt wird. Für die Durchfürhung des Verfahrens wird ein Reaktor (1) verwendet, der zwei Elektroden (2 und 3) aufweist, wobei die erste Elektrode (2) an eine Stromquelle (5) und die zweite Elektrode an Masse angeschlossen ist. Die beiden Elektroden sind in definiertem Abstand parallel und flächendeckend zueinander angeordnet. Die erste Elektrode (2) weist auf ihrer der zweiten Elektrode (3) zugewandten Seite eine Schicht aus einem dielektrischen Werkstoff (4) auf.

Fig.1

EP 0 158 823 A2

0158823

BROWN, BOVERI & CIE    AKTIENGESELLSCHAFT

Mannheim                                    03. April 1984

Mp-Nr.566/84                              ZPT/P1-Kr/Kn

## Verfahren und Vorrichtung zur Reinigung von Abgasen

Die Erfindung bezieht sich auf ein Verfahren zur Reinigung von Abgasen gemäß dem Oberbegriff des Patentanspruches 1 sowie auf eine Vorrichtung zur Durchführung des Verfahrens.

Ein solches Verfahren ist zur Reinigung von $NO_x-$, $SO_2-$ und staubhaltigen Abgasen aller Art geeignet, gleichgültig ob sie aus einer Verbrennungsmaschine oder einer Verbrennungsanlage kommen.

Bekannt ist bereits ein Verfahren, bei dem mit Hilfe von Elektronenstrahlen Abgase aus Kraftwerken gereinigt werden können. Bei diesem Electron-Beam-Dry-Scrubber-Verfahren werden die Elektronen in einem Vakuum bei $10^{-6}$ Torr erzeugt und auf hohe Energien beschleunigt. Anschließend werden sie durch eine gekühlte Folie in den Reaktor geschossen, durch welchen das zu reinigende Abgas geleitet wird. Ein Teil der eingespeisten Energie geht als Verlustwärme in der Folie verloren. Von Nachteil ist bei diesem Verfahren, daß es energieaufwendig und deshalb kostenintensiv ist.

Der Erfindung liegt deshalb die Aufgabe zugrunde ein Verfahren aufzuzeigen, mit dem $NO_x-$, $SO_2-$ und staub-

haltige Abgase jeder Art sehr billig gereinigt werden
können.

Diese Aufgabe wird erfindungsgemäß durch die kennzeichnenden Merkmale des Patentanspruches 1 gelöst.

Zwei Vorrichtungen zur Durchführung des Verfahrens sind
in den Patentansprüchen 4 und 7 offenbart.

Mit dem erfindungsgemäßen Verfahren ist es möglich die
im Abgas enthaltenen Anteile an $NO_x$ und $SO_2$ chemisch
umzusetzen. Je nach Prozessführung und zugehöriger
apparativer Gestaltung der Reinigungsanlagen können
insbesondere NO reduziert und $SO_2$- oxidiert oder beide
Gase oxidiert werden. Die bei dieser Reaktion gebildeten
Zwischenprodukte, z.B. $H_2SO_4$ oder $HNO_3$ können kondensiert werden oder durch Zugabe von Ammoniak in Ammoniumsulfat bzw. Ammoniumnitrat umgewandelt werden. Andere
Zusätze mit oxidierendem oder reduzierendem Charakter
sind ebenfalls möglich. Der in dem Abgas enthaltene
Staub wird mit Hilfe des ausgebildeten elektrischen
Feldes aus dem Abgas abgeschieden.

Für die Durchführung des Verfahrens wird ein Reaktor
verwendet, der zwei flächige Elektroden aufweist, die in
definiertem Abstand parallel zueinander angeordnet sind.
Eine der beiden Elektroden ist auf ihrer der zweiten
Elektrode zugewandten Seite mit einem dielektrischen
Werkstoff vorzugsweise Glas beschichtet. An die beiden
Elektroden wird eine Gleich- oder gepulste Wechselspannung angelegt, derart, daß es zur Ausbildung mehrer
voneinander getrennter, lokal begrenzter Entladungszonen,insbesondere zur Bildung kleiner Plasmazonen
kommt. Durch diese Entladungszonen wird das zu reinigende Abgas wenigstens teilweise hindurchgeschickt. Erfindungsgemäß ist die der dielektrischen Schicht der ersten Elektrode gegenüberliegende zweite Elektrode mit Löchern versehen, über welche das Abgas zwischen die beiden Elektroden eingeleitet werden kann. Es besteht die Möglichkeit, die zweite Elektrode auch geschlossen auszubilden und das zu reinigende Abgas parallel zur Längsachse der beiden Elektroden in den Bereich zwischen diesen einzuleiten. Erfindungsgemäß sind die beiden den Reaktor bildenden Elektroden rechteckig ausgebildet. Über eine oder mehrere Leitungen können Zusätze in Form von Ammoniak oder anderen oxidierenden oder reduzierenden chemischen Verbindungen in den Reaktor, insbesondere in den Bereich zwischen den Elektroden bzw. vor oder hinter diesen eingeleitet werden.

Erfindungsgemäß kann die zweite der dielektrischen Schicht gegenüberliegende Elektrode als bewegliches Endlosband ausgebildet, das eine bürstenartige Oberfläche aufweist. Beim Anlegen einer Gleichspannung zwischen den beiden Elektroden, insbesondere beim Anlegen einer negativen Spannung an diese bewegliche Elektrode wird der im Abgas enthaltene Staub zu dieser Elektrode hinbewegt, und von ihrer bürstenartigen Oberfläche aufgenommen. Der Staub kann aus der bürstenartigen Oberfläche ausgewaschen, abgesaugt oder von ihr abgekratzt werden.

Außer der geschilderten Anordnung zur Erzeugung eines Plasmas bzw. vieler Microplasmen, können auch andere Plasmaquellen wie Microwellen, Hochfrequenzwellen, Bogen- oder Korona-Entladungen zur Erzeugung solcher Entladungszonen verwendet werden.

Das erfindungsgemäße Verfahren kann auch zur selektiven Entstickung von zuvor entschwefelten Abgasen verwendet werden. In diesem Fall wird der Reaktor hinter die Entschwefelungsanlage geschaltet.

Die zur Reinigung des Abgases in dem erfindungsgemäßen Reaktor verwendeten Elektronen bedürfen keiner hohen Beschleunigungsenergie. Die Verwendung von Vakuumelektronenkanonen zur Erzeugung von Elektronen mit hoher Energie sind deshalb nicht erforderlich, so daß die Reinigung des Abgases sehr kostengünstig durchgeführt werden kann. Die Entladung zwischen den Elektroden des Reaktors erfolgt mit einer sehr niedrigen Leistungsflächendichte. Zur Reinigung großer Rauchgasmengen werden Flächen benötigt, welche die Dimension des Querschnittes der Rauchgasleitung aufweisen.

Die Erfindung wird nachfolgend anhand von Zeichnungen erläutert.

Es zeigen:

Figur 1:    Einen Vertikalschnitt durch einen Reaktor zur Reinigung von Abgasen,

Figur 2:    eine Variante des in Figur 1 gezeigten Reaktors,

Figur 3:    eine weitere Ausführungsform des erfindungsgemäßen Reaktors.

Figur 4:    eine dritte Variante eines Reaktors

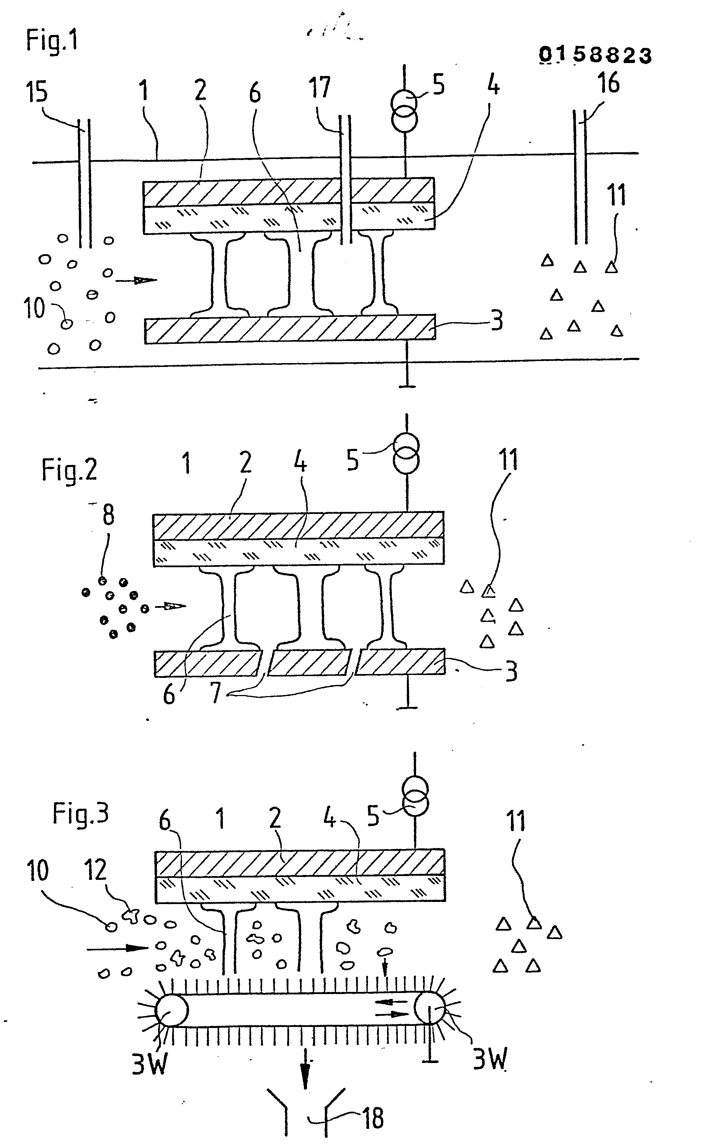

In Figur 1 ist der erfindungsgemäße Reaktor 1 schematisch dargestellt. Bei dem hier gezeigten Ausführungsbeispiel wird er durch zwei Elektroden 2 und 3 gebildet, die in einem Abstand von wenigen Millimetern senkrecht und flächendeckend voneinander angeordnet sind. Die beiden Elektroden 2 und 3 sind vorzugsweise rechteckig ausgebildet und aus flächigen Metallplatten gefertigt. Die erste Elektrode 2 ist auf ihrer der zweiten Elektrode 2 zugewandten Seite mit einer dielektrischen Schicht 4 versehen, die bei dem hier dargestellten Ausführungsbeipiel aus Glas gefertigt ist. Die beiden Elektroden 2 und 3 sind mit einer positiven Gleichstromquelle verbunden, wobei eine der beiden Elektroden 2 und 3 an Masse angeschlossen ist. Anstelle einer Gleichspannungs- bzw. Gleichstromquelle kann an die beiden Elektroden auch an eine gepulste Spannung angeschlossen werden. In beiden Fällen kommt es zwischen den beiden Elektroden 2 und 3, insbesondere zwischen der dielektrischen Schicht 4 und der zweiten Elektrode 3, zur Ausbildung mehrerer kleiner lokal begrenzter, voneinander getrennter Entladungszonen 6. Das zu reinigende Abgas 10 wird zwischen die Elektroden 2 und 3 eingeleitet und den Entladungszonen 6 zugeführt. Die Einleitung des zu reinigenden Abgases 10 erfolgt vorzugsweise parallel zur Längsachse der beiden Elektroden 3 und 4. Über die Leitungen 15, 16 und 17 können chemische Zusatzstoffe in den Reaktor eingeleitet werden. Erfindungsgemäß werden solche Stoffe in den Reaktor eingeleitet, die oxidierende oder reduzierende Eigenschaften besitzen und durch Unterstützung des Plasmas die Abgaskomponenten $NO_x$ und/oder $SO_2$ in verwertbare Endprodukte umsetzen. Ein geeigneter Zusatzstoff ist beispielsweise Ammoniak. Damit kann aus den Abgaskomponenten Ammoniumsulfat bzw. Ammoniumnitrat gebildet wird.

Anstelle der beiden Elektroden 2 und 3 kann der Reaktor 1 bei Bedarf auch mit mehr als zwei Elektroden ausgerüstet werden, insbesondere dann, wenn große Mengen an Abgas zu reinigen sind. Erfindungsgemäß besteht die Möglichkeit eine Vielzahl solcher Elektrode 2 und 3 alternierend untereinander anzuordnen, so daß auf eine Elektrode 2 nach oben und untenhin eine Elektrode 3 folgt, und sich an diese wieder eine Elektrode 2 anschließt usw. Bei Verwendung mehrerer solcher Elektroden 2 und 3 zur Bildung eines Reaktors 1 weisen die Elektroden 2,3 alle wiederum den gleichen Abstand voneinander auf. Die Elektroden 2 sind auf ihren den Elektroden 3 zugewandten Oberflächen auch hierbei mit einer dielektrischen Schicht 4 versehen. Zwischen jeweils zwei Elektroden 2 und 3 kann dann eine gewisse Menge an Abgas zur Reinigung hindurchgeleitet werden.

Die Länge der verwendeten Elektroden 2 und 3 wird, gleichgültig ob der Reaktor 1 nur aus zwei solcher Elektroden oder mehreren besteht, vorzugsweise zwischen 0,1 und 1 m gewählt. Im Bedarfsfall können mehrere solcher Reaktoren zur Reinigung des Abgases hintereinander geschaltet werden, wobei das zu reinigende Abgas durch die gesamte Reihenschaltung der Reaktoren 1 hindurchgeleitet wird.

Das gereinigte aus dem Reaktor 1 austretende Abgas ist hier und bei allen anderen Darstellungen mit 11 bezeichnet.

Die in Figur 2 dargestellte Ausführungsform des Reaktors weist die gleichen Bauteile auf, wie die in Figur 1 dargestellte und in der zugehörigen Beschreibung erläuterte Ausführungsform. Gleiche Bauteile sind deshalb mit gleichen Bezugszeichen versehen. Der Unterschied besteht in der Ausbildung der Elektrode 3 und der Zuführung des Abgases. Wie Figur 2 zeigt, ist die Elektrode 3 bereichsweise mit Öffnungen 7 versehen. Diese Öffnungen sind senkrecht zur Längsachse der zweiten Elektrode 3 angeordnet. Sie ermöglichen die Zuführung des zu reinigenden Abgases in den Bereich zwischen den beiden Elektroden 2 und 3, und zwar senkrecht zur Längsachse dieser beiden Elektroden. Dadurch ist die Möglichkeit gegeben, parallel zur Längsachse der Elektroden 2 und 3 Stickstoffgas 8 in den Bereich zwischen den Elektroden 2 und 3 einzuführen. Durch diese Maßnahme kann aus dem eingeleiteten Stickstoffgas 8 atomarer Stickstoff erzeugt wird, der dann zur Reduktion des im Abgas 6 enthaltenen Stickoxids herangezogen wird. Durch die zusätzliche Verwendung von atomarem Stickstoff für die Reduktion des Stickoxids wird die Wirkungsweise des Reaktors 1 noch verbessert. Insbesondere kann hiermit Abgas gereinigt werden, das mit großen Mengen an Stickoxid beladen ist. Durch Verwendung dieses Reaktors wird sichergestellt, daß ein solches Abgas nach der Reinigung vollständig von Stickoxid befreit ist.

Der in Figur 3 dargestellte Reaktor 1 ist insbesondere für die Reinigung von Abgasen geeignet, die neben Schwefeldioxid, Stickoxid zusätzlich mit Staub beladen sind. Der dargestellte Reaktor 1 weist wiederum zwei Elektroden 2 und 3 auf. Die erste Elektrode wird durch eine metallisch Fläche gebildet, welche die gleichen Abmessungen aufweist, wie die in den Fingur 1 und 2 dargestellten Elektroden. Die Elektrode 2 ist auf ihrer der zweiten Elektrode 3 zugewandten Seite mit einer dielektrischen Schicht 4, insbesondere einer Glasschicht überzogen. Zusätzlich ist die Elektrode 2 an eine Stromquelle 5 angeschlossen. In definiertem Abstand von dieser Elektrode 2, vorzugsweise in einem Abstand von wenigen Millimetern ist die zweite Elektrode 3 so angeordnet, daß sie parallel und flächendeckend zur ersten Elektrode 2 angeordnet ist.

Die zweite Elektrode 3 ist, wie Figur 3 zeigt, als Endlosband ausgebildet. Dieses Endlosband weist die gleiche Breite wie die Elektrode 2 auf. Das Endlosband ist beweglich gehaltert und zu diesem Zweck über zwei Walzen 3W geführt. Eine der beiden Walzen ist an Masse angeschlossen. Die beiden Walzen 3W sind so positioniert und die Abmessungen der Elektrode 3 so gewählt, daß die der ersten Elektrode 2 zugewandte Oberfläche der Elektrode 3 die gleiche Länge wie diese aufweist. Die Oberfläche der Elektrode 3 ist bürstenartig ausgebildet. Insbesondere sind auf der gesamten Oberfläche der Elektrode 3 dünne Drähte so angeordnet, daß sie senkrecht von der Oberfläche abstehen.

Das zu reinigende Abgas 10 wird parallel zur Längsachse der beiden Elektroden 2 und 3 zwischen diese eingeleitet. Durch den Anschluß der Stromquelle 5 werden zwischen den beiden Elektroden 2 und 3 mehrere lokal begrenzte, voneinander getrennte Entladungszonen 6 ausgebildet, deren Wirkungen das zu reinigende Abgas 10 ausgesetzt wird. Der im Abgas 10 enthaltene Staub wird aufgrund des sich ausbildenden elektrischen Feldes zu der zweiten negativ geladenen Elektrode 3 transportiert und dort von deren bürstenartiger Oberfläche aufgenommen. Die als Endlosband ausgebildete Elektrode 3 wird mit Hilfe der beiden Walzen 3W kontinuierlich bewegt, so daß der sich auf der Oberfläche der Elektrode 3 ansammelnde Staub ständig aus dem Bereich der Entlandungszonen 6 abtransportiert wird. Auf der rückwärtigen Seite wird der Staub dann durch Waschen oder Beblasen der Oberfläche abgenommen und einem Staubbunker 18 zugeleitet werden, so daß die Oberfläche anschließend für eine weitere Benutzung wiederum zur Verfügung steht.

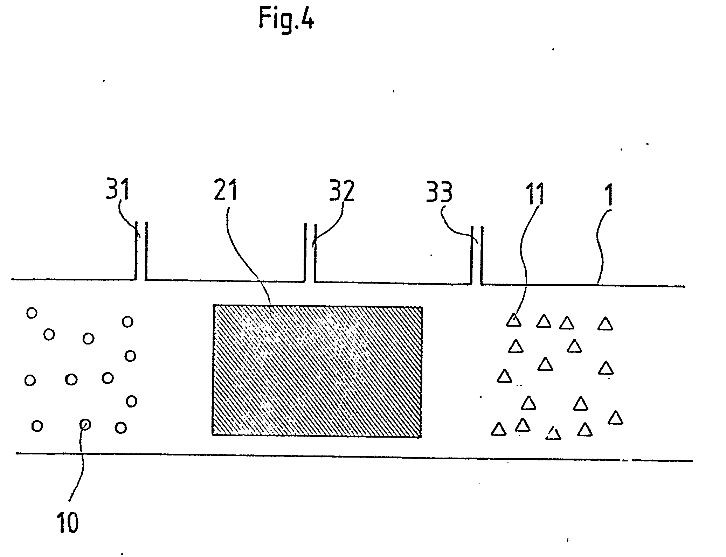

Figur 4 zeigt schematisch einen Reaktor 1, insbesondere dessen Reaktionszone 21. Diese Reaktionszone 21 kann beispielsweise als Rohr ausgebildet und so bemessen sein, daß sie als Teilstück eines Abgaskanals, (hier nicht dargestellt) verwendet werden kann. Die plasmaerzeugende Anordnung ist hierbei innerhalb der Reaktionszone 21 angeordnet, in der das Abgas gereinigt wird. Sie wird durch eine Mikrowellen- oder eine Hochfrequenzquelle, durch eine Bogen-, Funken- oder eine sogenannte stille Entladungsanordnung gebildet. Über die Leitungen 31,32 und 33 werden Zusatzstoffe in die Reaktionszone eingeleitet, welche die Wirkung des erzeugten Plasmas unterstützen.

10

0158823

## Ansprüche

1. Verfahren zur Reinigung von $NO_x$-, $SO_2$ und staubhaltigen Abgasen jeder Art, dadurch gekennzeichnet, daß mindestens ein Plasma und/oder mehrere voneinander getrennte, lokal begrenzte Entladungszonen (6) gebildet werden, durch welches (e) das zu reinigende Abgas (10) wenigstens bereichsweise hindurchgeleitet wird.

2. Verfahren nach Anspruch 1, dadurch gekennzeichnet, daß das Plasma mit Hilfe eines Plasmajets, einer Mikrowellenquelle, einer stillen-Entladung oder Korona-entladung, einer Hochfrequenzentladung oder einer Bogenentladung gebildet wird.

3. Verfahren nach Anspruch 1, dadurch gekennzeichnet, daß die voneinander getrennten, lokal begrenzten Entladungszonen (6) durch eine Gleichstromentladung und/oder eine gepulste Entladung gebildet und zwischen zwei Elektroden (2,3) erzeugt werden, von denen mindestens eine vor der Ausbildung der Entladungszonen (4) mit einer dielektrischen Schicht (4) überzogen wird.

4. Reaktor zur Durchführung des Verfahrens insbesondere nach Anspruch 1, gekennzeichnet durch wenigstens zwei in definiertem Abstand senkrecht untereinander angeordnete metallische Elektroden (2,3), die flächig ausgebildet sind, daß mindestens eine erste Elektrode (2) zur Bildung einer Gleichstrom- oder einer gepulsten Entladung mit einer Stromquelle (5) verbunden und eine zweite Elektrode (3) an Masse angeschlossen ist, und daß zwischen den beiden Elektroden (2 und 3) das zu reinigende Abgas hindurchzuführen ist.

5. Reaktor nach Anspruch 4, dadurch gekennzeichnet, daß mehrere Elektroden (2 und 3) alternierend und flächendeckend jeweils in einem Abstand von wenigen Millimetern senkrecht untereinander angeordnet sind.

6. Reaktor nach Anspruch 4 oder 5, dadurch gekennzeichnet, daß jede erste Elektrode (2) auf ihren einer zweiten Elektrode (3) zugewandten Oberflächen mit einer dielektrischen Schicht (4) überzogen ist.

7. Reaktor zur Durchführung des Verfahrens nach Anspruch 1, dadurch gekennzeichnet, daß innerhalb oder außerhalb der Reaktionszone (21) des Reaktors (1) eine Plasmaquelle zur Erzeugung eines Plasmas vorgesehen und das zu reinigende Abgas (10) wenigstens bereichsweise durch dieses Plasma hindurchgeführt ist.

8. Reaktor nach Anspruch 7, dadurch gekennzeichnet, daß die Plasmaquelle durch einen Plasmajet gebildet ist.

9. Reaktor nach Anspruch 7, dadurch gekennzeichnet, daß der Reaktor (1) mit einer Mikrowellenquelle, einer Hochfrequenzquelle, einer Einrichtung zur Erzeugung einer Bogenentladung bzw. Funkenentladung oder mit einer Einrichtung zur Erzeugung einer stillen Entladung bzw. Koronaentladung zur Erzeugung eines Plasmas ausgerüstet ist, und daß der Reaktor (1) mit Leitungen (31,32,33) versehen ist, über welche Zusätze in Form von chemischen Verbindungen in die Reaktionszone (21) einleitbar sind.

Fig.1

0158823

Fig.2

Fig.3

Fig.4

0158823